(19) Europäisches Patentamt
European Patent Office
Office européen des brevets

(11) **EP 3 687 697 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **18785505.1**

(22) Anmeldetag: **28.09.2018**

(51) Internationale Patentklassifikation (IPC):
*B03C 1/033* (2006.01)   *B03C 1/28* (2006.01)
*E06B 9/24* (2006.01)   *E06B 3/67* (2006.01)
*E04B 2/88* (2006.01)

(52) Gemeinsame Patentklassifikation (CPC):
**E06B 9/24; B03C 1/0332; B03C 1/0335; B03C 1/288; B03C 1/30; E06B 3/6722;**
B03C 2201/18; E06B 2009/2411

(86) Internationale Anmeldenummer:
**PCT/DE2018/100820**

(87) Internationale Veröffentlichungsnummer:
**WO 2019/063047 (04.04.2019 Gazette 2019/14)**

(54) **GEBÄUDEHÜLLENFLÄCHENELEMENT MIT STEUERBARER ABSCHATTUNG**

BUILDING ENVELOPE SURFACE ELEMENT

ÉLÉMENT DE SURFACE D'ENVELOPPE DE BÂTIMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017 DE 102017122812**

(43) Veröffentlichungstag der Anmeldung:
**05.08.2020 Patentblatt 2020/32**

(73) Patentinhaber: **Flachglas Entwicklungs GmbH 04668 Grimma (DE)**

(72) Erfinder: **WONDRACZEK, Lothar 07743 Jena (DE)**

(74) Vertreter: **Weihrauch, Frank et al Dr. Weihrauch & Haussingen Patent- und Rechtsanwälte W.-Seelenbinder-Straße 17 98529 Suhl (DE)**

(56) Entgegenhaltungen:
**EP-A1- 3 061 529      DE-A1- 10 157 843
DE-A1-102004 059 897   DE-A1-102014 012 559
US-A1- 2010 326 909    US-A1- 2014 123 578
US-B2- 9 279 603**

**EP 3 687 697 B1**

**Beschreibung**

Die Erfindung betrifft ein Gebäudehüllenflächenelement mit steuerbarer Abschattung zum Einsatz in Gebäudeaußenfassaden als Glasaußenwand-, Glasdach- und Fensterelement. Sie ist insbesondere zur Sonnenabblendung, aber auch zur solarthermischen Energiegewinnung geeignet.

In der modernen Architektur spielen großflächige Glasfassadenelemente eine nicht mehr wegzudenkende Rolle, bei der es zunehmend darauf ankommt, die Interaktion zwischen dem Inneren eines Gebäudes und seiner Umgebung zu erleichtern, sich auf eine hohe Transparenz des Materials für sichtbares (Vis) und Infrarot (IR) Licht zu verlassen und in einer Vielzahl von klimatischen Einsatzbedingungen eine thermischen Ausgleichsfunktion mit einer überlegenen Langzeitstabilität zu erreichen. Glasfassaden sorgen für visuellen Komfort und menschliches Wohlbefinden, aber auch für die Produktivität in gewerblichen Gebäuden. Im Zusammenhang mit der Verwendung von Glas sind jedoch eine dedizierte Steuerung des Wärmetransports, sowohl in Heiz- als auch in Kühl-Szenarien, ebenso wie eine jahreszeitlich bedingte Abschattung, sei es für die Verringerung der Blendung oder für die Verbesserung der Privatsphäre, von besonderem Interesse. Die erstere Forderung wird typischerweise durch die Verwendung von komplexen mehrschichtigen Beschichtungen erreicht, die ein selektives Reflexionsvermögen im Vis- und IR-Spektralbereich ermöglichen und beispielsweise einen niedrigen Emissionsgrad (low-e) oder einen hohen Sonnenschutz bieten. Solche Beschichtungen werden häufig mit der hohen Isolationsfähigkeit von Doppel-, Dreifach- oder sogar Vakuumverglasung kombiniert. Eine Abschattung oder - verallgemeinert - eine Bereitstellung von Interieurs mit abstimmbaren Tageslichtniveaus ist eine sekundäre Funktion, die den Glaselementen eine beträchtliche Komplexität hinzufügt. Konventionelle Vorrichtungen, wie Jalousien, Rollläden oder Vorhänge, sorgen für statische optische Eigenschaften und geben nur eingeschränkte Möglichkeiten für adaptive Reaktionen auf variable Wetterbedingungen. Ähnlich wird die Blendungsstörung im Allgemeinen auf Kosten des verwertbaren Tageslichts verringert, sodass künstliches Licht möglicherweise zur Kompensation und trotz hoher Außenlichtverfügbarkeit verwendet werden muss. Die Entwicklung von Systemen, die eine dynamische Steuerung des natürlichen Lichtflusses durch Glasfassaden ermöglichen und gleichzeitig zu einer drastischen Reduzierung der $CO_2$-Emissionen von vollverglasten Gebäuden (geschätzt auf rund 40% des europäischen Energiebedarfs) führen, ist derzeit im Fokus des so genannten Smart-Fenster-Sektors.

Aus dem Stand der Technik sind für maßgeschneiderte Abschattung und Transparenzkontrolle eine Vielzahl von innovativen Verglasungstechniken bekannt, die sowohl die Sonnenschutzfunktion als auch die Reduzierung des Strahlungswärmeverlusts aus dem Gebäude berücksichtigen. Dazu gehören verschiedene Konzepte für schaltbare Fenster, bei denen die optischen Eigenschaften durch einen externen Trigger manipuliert werden können. Elektrisch steuerbare Verglasungen stützen sich vor allem auf den Einsatz von chromogenen wechselspannungsbetriebenen Schwebepartikelvorrichtungen (SPD) oder Flüssigkristallvorrichtungen (LCD). Alle diese benötigen elektrische Leitfähigkeit auf der Glasoberfläche, die üblicherweise durch transparente leitfähige Oxidschichten (TCO-Schichten) erhalten wird.

Unter der so genannten SPD-Technologie wird verstanden, dass eine dünne Laminatschicht von (vorzugsweise stabförmigen) Partikeln schwebend in einer Flüssigkeit (Fluid) zwischen zwei Glas- oder Plastikplatten oder anhaftend an einer Schicht gehalten wird. Ohne äußere Spannung befinden sich die Partikel in statistisch zufällig ausgerichtetem Zustand, bei angelegter Spannung richten sich die Partikel beispielsweise definiert aus und lassen das Licht passieren. Durch Änderung der Spannung kann die Ausrichtung der Partikel variiert werden, sodass sich die Tönung der Verglasung und der Anteil des transmittierten Lichts anpassen lassen. SPD lassen sich manuell oder automatisch regeln, um den durchgelassenen Anteil von Licht, Blendlicht oder Wärme präzise zu steuern, und reduzieren den Einsatz von Klimaanlagen im Sommer und Heizung im Winter. Die Steuerung der SPD kann durch eine Vielzahl von Medien erfolgen, wie z.B. automatische Photosensoren, Bewegungsdetektoren, Mobiltelefon-Anwendungsprogramme, Integration in intelligente Gebäude und Fahrzeugsysteme, Drehknöpfe und Lichtschalter, etc.

Für reale Anwendungen, bei denen ein Zusammenwirken mit weiteren Hilfskomponenten, wie Sekundärbeschichtungen, Elektrolyten, Farbstoffen, Dichtungsschichten und Klebstoffen, erforderlich ist, sind die Endlösungen äußerst komplex. Problematisch sind neben den hohen Kosten die TCO-Schichten oder Systeme mit Low-e-Schichten, die mit Dickenanforderungen, Isolationsfunktionen oder - spezifisch für den Bausektor - mit Gewichtsgrenzen sowie mit Prozesskompatibilität für die extrem vielfältigen Fenstergeometrien, standardisierten Rahmen oder Halterungen interferieren.

Konkret beinhalten die Beschränkungen von elektrischen Vorrichtungen typischerweise:

(1) die Einschränkung auf eine dünne Schicht von immobilisierter Flüssigkeit, die die Schaltfunktion aufweist, was die erwartete Lebensdauer der Vorrichtung verringert,

(2) ausgedehnte Relaxationszeiten zwischen opaken und ungefärbten Zuständen, die gewöhnlich mehrere Minuten beanspruchen,

(3) das Erfordernis einer kontinuierlichen Stromversorgung im transparenten Zustand mit häufig anzutreffenden Leistungsaufnahmen von 5-20 W $m^{-2}$ und

(4) die reduzierte Langzeit-UV-Stabilität und hohe Kosten, die vor allem aus den verwendeten TCO resultieren.

Tatsächlich erzeugt Zinn-dotiertes Indiumoxid (ITO) als die am häufigsten verwendete TCO-Schicht erhebliche Probleme aufgrund der Bereitstellung von Indiumoxid zu akzeptablen Preisen. Trotz der Verfügbarkeit von alternativen transparenten Leitern, wie z. B. Poly-3,4-ethylendioxythiophen (PEDOT) oder Schichten aus Kohlenstoff-Nanoröhrchen (CNT), können damit derzeitige Smart-Fenster-Anforderungen nicht erfüllt werden. Während PEDOT unter schlechter Umweltstabilität und nicht ausreichender Tönung leidet, sind CNT-Schichten noch nicht für kostengünstige Großflächenanwendungen verfügbar.

Im Stand der Technik der elektrisch gesteuerten Fensterelemente (sog. Smart Windows) auf Basis von SPD-Technologien sind im Wesentlichen zwei unterschiedliche Betriebskonzepte, die spannungsgesteuerten mit einem aktiven Fluid und die umlaufgesteuerten mit einem passiven Fluid, bekannt geworden.

Ein technologischer Grundaufbau eines Gebäudehüllenflächenelements ist beispielsweise in der DE 10 2014 012 559 A1 beschrieben, wobei ein Aufbau aus zwei flächigen Glaselementen offenbart ist, von denen mindestens eines eine Vielzahl von längsgerichteten Vertiefungen aufweist, die von dem anderen Flächenelement abgedeckt sind und so Kapillarkanäle bilden. Die Kapillarkanäle münden an beiden Endbereichen in je einem Sammelkanal, von denen der eine den Vorlauf und der andere den Rücklauf beim Anschluss an einen Fluidkreislauf bildet und somit eine gleichmäßige, gleichgerichtete Durchströmung der Kapillarkanäle mit dem Fluid ermöglicht. Als Fluid ist ein Öl offenbart, in dem suspensiv infrarotsensitive Partikel zur Aufnahme von Wärmestrahlung aus der Umgebung des Gebäudeflächenelements eingebracht sind, sodass insbesondere solare Wärmestrahlung von außen, aber auch Strahlung aus dem Gebäudeinneren aufgenommen und einem geschlossenen Heiz- und Wärmespeicherkreislauf zugeführt werden kann.

Aus der US 2009/0308376 A1 ist eine weitere Vorrichtung bekannt geworden, um Solarenergie aufzunehmen und zugleich den Lichteintritt durch ein Fensterelement ins Gebäudeinnere zu steuern. Hierbei wird ein System aus zwei Rahmen beschrieben, die Platten aus transparentem Material tragen, zwischen denen eine farbige Lösung aus einem externen Reservoir eingeführt wird. Die beiden Rahmen sind durch eine flexible Membran miteinander verbunden, sodass sie gegeneinander gedrückt werden können, um das Fenster transparent zu machen, oder voneinander weggedrückt werden, um die farbige Lösung dazwischenzuschalten und das Fensterelement graduell undurchlässiger oder opak zu machen. Der Zufluss und Abfluss der farbigen Lösung wird durch das Vakuumniveau innerhalb des externen Reservoirs mit der farbigen Lösung geregelt, wobei im opaken oder teilweise transparenten Zustand des Fensterelements die Flüssigkeit durch die Solarenergie aufgeheizt und durch eine Zirkulationspumpe zu einem Wärmetauschen geführt wird.

Ferner ist in der US 2014/0204450 A1 ein Kapillarfluidischer thermooptischer Prozessor beschrieben, der ein Substrat mit mehreren Kanälen zur Durchströmung mit einem Fluid aufweist, wobei die Flüssigkeit so ausgewählt ist, um thermische Energie aufzunehmen und zu speichern, und das Kapillarfluidische Panel geeignet angepasst ist, um die thermische Energie in nutzbare Energie umzuwandeln oder die Energie zu konditionieren zur Einstellung auf einen optischen Wellenlängenbandpasses des Panels. Zur Energiespeicherung in der Flüssigkeit sind kohlenstoffhaltige Nanopartikel oder Partikel aus Zinksulfid, Zinkoxid, Cadmiumselenid, Indiumphosphid, Gold, Silber, Eisenoxid, Titandioxid, Silizium und Siliziumdioxid geeignet, die zugleich auch geringe Verzögerung für die Energiediffusion aufweisen. Für das Kapillarfluidische Panel ist ein Glaspanel mit einem Gitter von Kanälen vorgesehen, in dem die gespeicherte Energie durch einen thermoelektrischen Generator gewandelt wird.

Endlich ist aus der US2014/123578 A1 ein Gebäudehüllenflächenelement mit steuerbarer Abschattung, gemäß dem Oberbegriff des Anspruchs 1 bekannt.

Der Erfindung liegt die Aufgabe zugrunde, eine neue Möglichkeit zur steuerbaren Abschattung von Gebäudehüllenflächenelementen, wie Glasaußenwand-, Glasdach- oder Fensterelementen zu finden, die eine Steuerung ohne elektrische Flächenelektroden gestattet und kurze Umschaltzeiten aufweist. Als eine erweiterte Aufgabenstellung soll das Fluid eine hohe Wärmeaufnahmefähigkeit aufweisen, die in ebenfalls steuerbar ist.

Erfindungsgemäß wird die Aufgabe durch ein Gebäudehüllenflächenelement mit steuerbarer Abschattung, gemäß dem Anspruch 1 gelöst.

Vorteilhaft ist der Partikelkollektor durch Umschalten der Ausrichtung von Permanentmagneten gegenüber definierten Rohrabschnitten oder alternativ durch Einschaltungen von Elektromagneten aktivierbar.

Die definierten Rohrabschnitte des Partikelkollektors sind zweckmäßig raumsparend zweidimensional oder dreidimensional als Rohr- oder Schlauchbogen ausgebildet. Dabei können sie vorzugsweise mäanderförmig angeordnet sein oder Helixform, Spiralform oder damit gebildete Doppelanordnungen aufweisen.

Als Fluid können vorteilhaft klare Flüssigkeiten, wie wässrige Alkohollösungen, insbesondere wässrige Alkanollösungen, Paraffinöle oder Siliconöle verwendet werden.

Die suspensiv dem Fluid beigemengten magnetischen Partikel sind vorteilhaft aus Eisen, Eisenoxid, insbesondere Magnetit, oder aus dunkelfarbigen Seltenerdenmetallen oder -metalloxiden gefertigt. Sie weisen bevorzugt eine Größenklasse auf, die größer oder gleich einem Viertel der Wellenlänge einer auf das Kapillarglaselement einfallenden Strahlung ist, die durch die Partikel bevorzugt absorbiert werden soll.

Zweckmäßig enthält das die Kapillarkanäle tragende Kapillarglaselement zwei miteinander verbundene Platten, wobei zwischen gegenüberliegenden Oberflächen durch Oberflächenstrukturierung in wenigstens einer der Platten die Vielzahl paralleler Kapillarkanäle ausgebildet und mit der anderen Platte abgedeckt ist. Vorzugsweise ist dabei das Kapillarglaselement aus einer strukturierten Platte und einer unstrukturierten Deckplatte zusammengesetzt, wobei beide Platten mittels einer auflaminierten Kleberschicht mit angepasstem Brechungsindex miteinander verbunden sind.

Die Aufgabe wird des Weiteren durch ein Verbundfenster gelöst, indem mindestens ein Gebäudehüllenflächenelement nach einer der vorhergehenden Ausführungen verwendet wird, wobei das Gebäudehüllenflächenelement vorzugsweise den einem Gebäudeinnenraum zugewandten Abschnitt des Verbundfensters bildet, oder in einem Gebäudefassadensystem angewandt wird.

Die Erfindung basiert auf der Grundüberlegung, dass die elektrisch betriebenen Fensterelemente auf SPD-Basis stationäre Fluidschichten, aber teure und für den transparenten Zustand des Fensters ständig stromdurchflossenen Flächenelektroden aufweisen, die zusätzliche Schichten auf der Substratoberfläche erfordern und die technologische Herstellung erschweren oder unnötig kostenmäßig belasten. Andererseits haben umlaufende Fluide, die das Fensterelement durchströmen und die Partikeldichte variieren, um Transparenz und Wärmeaufnahme zu ändern, den Nachteil, dass sie auf Änderungen der äußeren Umstände zu langsam reagieren können bzw. zu lange für die Umschaltung der Zustände benötigen.

Die Erfindung beseitigt diese widerstrebenden Effekte dadurch, dass sie in einer umgewälzten Suspension Partikel mit magnetischen Eigenschaften einbringt, die einen großen Abschattungseffekt erzeugen. Der Umschalteffekt für Transparenz des Fensterelements wird dabei erreicht durch magnetische Ausfilterung der Partikel außerhalb der Fensterglasfläche in einem magnetisch gesteuerten Partikelkollektor. Vorteilhaft sind dabei Suspensionen von magnetischen Metallen, wie Eisen, Eisenoxid, insbesondere Magnetit, oder Seltenerdenmetallen oder -metalloxiden in transparenten klaren Flüssigkeiten, wie Wasser, wässrigen Lösungen von Alkoholen oder insbesondere Alkanolen, Paraffinölen oder Siliconölen, wobei die Partikel, vorzugsweise aus Eisen-II,III-Oxid, Eisen oder einem dunkelfarbigen Seltenerdenmetall oder -metalloxid, in räumlich begrenzten definierten Rohrabschnitten durch die Wirkung von Permanent- oder Elektromagneten konzentriert bzw. angelagert werden, wenn ein transparenterer Zustand erreicht werden soll. Als Zusatzeffekt weisen die suspensiv in einem Fluidkreislauf gepumpten Partikel eine hohe Wärmeaufnahmefähigkeit auf und eignen sich zur Verringerung der Wärmeaufnahme des Gebäudehüllenflächenelementes durch Abführung der Wärmeeintrags durch .

Mit der Erfindung ist es möglich, Gebäudehüllenflächenelemente, wie Glasaußenwand-, Glasdach- oder Fensterelemente, mit steuerbarer Abschattung und Absorption von Licht sowie Wärmestrahlung zu realisieren, die eine Steuerung ohne elektrische Flächenelektroden gestattet und eine hohe Wärmeaufnahme des Fluids sowie kurze Umschaltzeiten für die Änderung von Transparenz und Wärmeaufnahme aufweist.

Die Erfindung wird nachfolgend anhand von Ausführungsbeispielen und Abbildungen näher erläutert. Dabei zeigen:

Fig. 1a:    eine Prinzipdarstellung der Erfindung als Schnittzeichnung durch einen Kapillarkanal des Gebäudehüllenflächenelements mit einem passiven Fluid und magnetischen Partikeln in einem gepumpten Fluidkreislauf, links im ausgeschalteten, rechts im eingeschalten Zustand;

Fig. 1b:    eine schematische Darstellung der AUS- und EIN-Betriebszustände des SPD-Fensterbereichs des Gebäudehüllenflächenelements in einer Draufsicht;

Fig. 2a:    eine schematische Darstellung des prinzipiellen Aufbaus eines Gebäudehüllenflächenelements mit Fluidkreislauf;

Fig. 2b:    eine schematische Darstellung eines bevorzugten Aufbaus der erfindungsgemäßen Vorrichtung mit zwei Glaselementen, wobei die Vertiefungen des ersten Glaselements durch das zweite Glaselement verschlossen werden;

Fig. 3a:    eine schematische Darstellung eines Partikelkollektors in einer vorteilhaften Ausführung mit mäanderförmigen Rohrabschnitten und einem Satz gleichmäßig ausgerichteter Permanentmagnete im eingeschalteten Zustand (ON);

Fig. 3b:    eine schematische Darstellung des zweckmäßig gestalteten Partikelkollektors von Fig. 3a im Ausschaltzustand (OFF) durch in Parallelstellung zu den Rohrabschnitten gedrehte Permanentmagnete;

Fig. 3c:    eine grafische Darstellung des Zeitverhaltens des Partikelkollektors zwischen den Zuständen von Fig. 3a und Fig. 3b;

Fig. 3d:    eine schematische Darstellung einer zweiten Ausführung des Partikelkollektors mit Rohrführungen in Spiralform und gleichmäßig verteilt angeordneten Elektromagneten, die durch Stromfluss in den ON-Zustand geschaltet werden,

Fig. 3e:    eine schematische Darstellung einer weiteren Ausführung des Partikelkollektors mit Rohrführungen in Helixform und gleichmäßig verteilt angeordneten Elektromagneten, die durch Stromfluss in den ON -Zustand geschaltet werden,

Fig. 4: eine schematische und eine grafische Darstellung der optischen Übertragung der erfindungsgemäßen Vorrichtung für verschiedene Partikelkonzentrationen während des Öffnens der erfindungsgemäßen Vorrichtung;

Fig. 5: eine schematische Darstellung der optischen Durchlässigkeit und des Reflexionsvermögens in einem laminierten Bereich (A) und einem Kapillarkanalbereich (B);

Fig. 6: eine Darstellung der Energiedichte von auf dem SPD-Fensterbereich des Gebäudehüllenflächenelements verfügbarer Solarenergie und der reflektierten und absorbierten Energieanteile,

Fig. 7a: eine Darstellung der mit Modellrechnung (links) und der experimentell (rechts) quantifizierten Leistung, die durch ein 300 × 210 mm fluidisches SPD bei künstlicher Beleuchtung mit einer Strahlungsflussdichte von 280 W m$^{-2}$, Eintrittstemperatur von 20 °C und einer Durchflussmenge von 50 ml min$^{-1}$ für drei verschiedenen Partikelkonzentrationen geerntet wurde,

Fig. 7b: eine Darstellung der mit Modellrechnung (links) und der experimentell (rechts) quantifizierten Leistung, die durch ein 300 × 210 mm$^2$ fluidisches SPD bei künstlicher Beleuchtung mit einer Strahlungsflussdichte von 280 W m$^{-2}$, Eintrittstemperatur von 20 °C und einer Durchflussmenge von 50 ml min$^{-1}$ für drei verschiedenen Partikelkonzentrationen geerntet wurde,

Fig. 8: eine Darstellung experimenteller Ergebnisse der quantifizierten Leistung, für die die ankommende Strahlungsflussdichte bei konstanter Strömungsgeschwindigkeit von 50 ml min$^{-1}$ und Partikelkonzentration von 0,25 Vol.% variiert wurde.

Fig. 9: einen Anwendungsfall für ein Smart-Fenster für Innenabschattung und gleichzeitige Solarenergieaufnahme und -abführung.

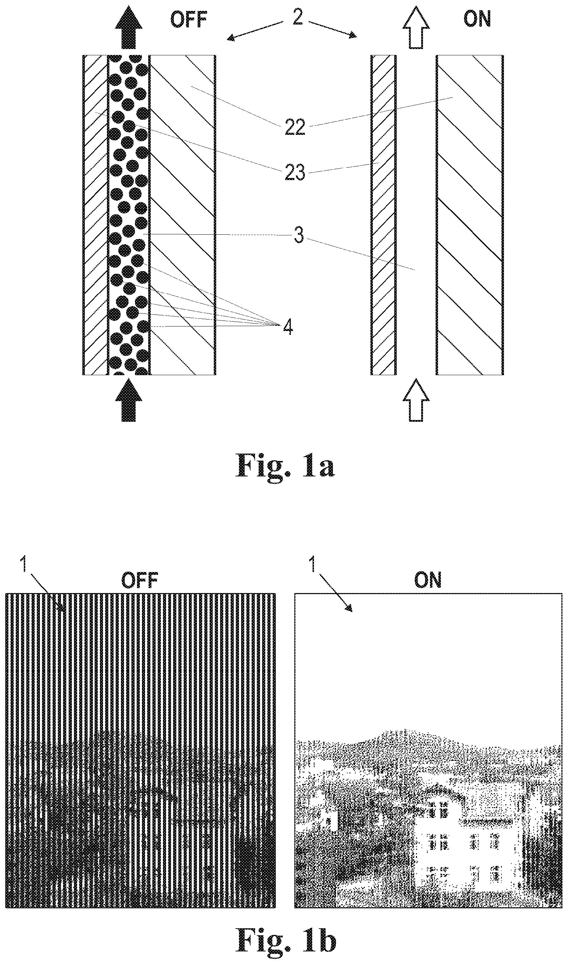

Das grundsätzliche Funktionsprinzip der neuen Vorrichtung auf Basis der SPD-Technologie ist in Fig. 1 dargestellt und zeigt in der oberen Darstellung a) links eine Schnittdarstellung des Gebäudehüllenflächenelements 1, das zwischen zwei transparenten Platten 22, 23 aus Glas oder Kunststoff das strömende Fluid 3 in der Ausführung als magnetoaktive Flüssigkeit mit magnetischen oder magnetisierten Partikeln 4 aufweist, die eine Abschattung der einfallenden Strahlung sowie eine hohe Absorption, insbesondere für infrarote Spektralanteile, bewirken. Als magnetische Partikel 4 mit der zusätzlich gewünscht hohen Absorptionsfähigkeit kommen Eisen-, Eisenoxid-, insbesondere Magnetit-, und Seltenerdenmetallpartikel zur Anwendung. Die Partikelgrößen werden zwischen 0,01 $\mu$m und 10 $\mu$m gewählt und liegen vorzugsweise zwischen 0,1 $\mu$m und 5 $\mu$m. Sie sind bevorzugt Nanopartikel, deren Größenklasse sich an den Wellenlängen der vorrangig zu absorbierenden Strahlung, vorzugsweise des sichtbaren Lichts ab 400 nm bis hin zu IR-Strahlung, orientiert und näherungsweise einem Viertel der mittleren Wellenlänge der zu absorbierenden Strahlung entspricht oder größer ist. Die Partikel 4 haben zweckmäßig eine derartig modifizierte Oberfläche, dass eine verbesserte Dispergierfähigkeit in wässrigen Alkanollösungen erreicht wird. Das kann vorzugsweise durch Maßnahmen zur elektrischen Aufladung geschehen.

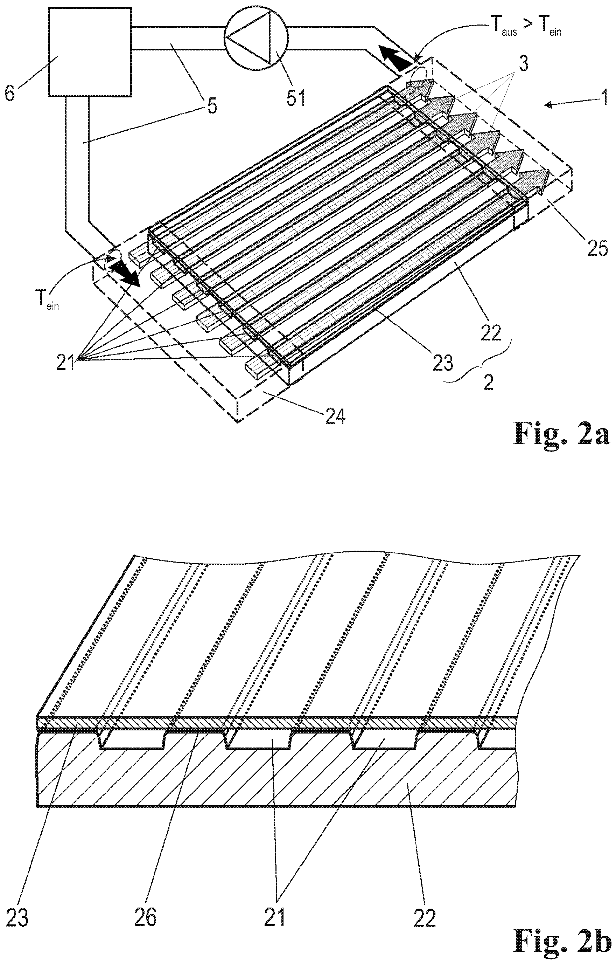

Die Lichtabschattungs- und Absorptionswirkung der Partikel 4 tritt sowohl für das in einem Kreislauf 5 (nur in Fig. 2a dargestellt) umlaufende Fluid 3 als auch für ein ruhendes Fluid 3 ein. Der Fluidumlauf ist jedoch die Voraussetzung für die Steuerbarkeit von Transmission und Absorption des Gebäudehüllenflächenelements 1.

Die linke Darstellung von Fig. 1a zeigt den AUS-Zustand (OFF) des Gebäudehüllenflächenelements 1, bei dem keine Steuerungswirkung auf die Partikel 4 ausgeübt wird. In der rechten Darstellung von Fig. 1a, die den ON-Zustand des Gebäudehüllenflächenelements 1 zeigt, sind die Partikel 4 aus dem strömenden Fluid 3 durch einen magnetisch arbeitenden Partikelkollektor 6 innerhalb eines gepumpten Kreislaufs 5 des Fluids 3 (nur in Fig. 2a dargestellt) ausgefiltert und werden innerhalb des Kreislaufs 5 im Bereich des Partikelkollektors 6 konzentriert und je nach Stärke des Magnetfeldes im Partikelkollektor 6 teilweise oder vollständig ausgefiltert und festgehalten.

Die mit der vorstehend beschriebenen Steuerung der durchströmenden Menge der magnetischen Partikel 4, die vorzugsweise Magnetit-Nanopartikel in Größenklassen zwischen 100 nm und 800 nm sind, ist in Fig. 1b) für die erwähnten OFF- und ON-Zustände nur schematisch qualitativ dargestellt, da die Kapillarkanäle 21 innerhalb wenigstens einer der Platten 2 nicht in realen Größen und Abständen darstellbar ist.

Der Aufbau eines erfindungsgemäßen Gebäudehüllenflächenelements 1 ist in Fig. 2 schematisch mit vergrößerter Ansicht des SPD (engl. Suspended Particle Device) dargestellt und verdeutlicht die gewünschte Energieaufnahme durch das Fluid 3 beim Durchströmen der in einer parallelen längsgerichteten Anordnung von Kapillarkanälen 21 eines Kapillarglaselements 2. Das Kapillarglaselement 2 ist in diesem Beispiel zweckmäßig aus einer strukturierten Platte 22, in die die Kapillarkanäle 21 als streifenförmige Nuten eingebracht sind, und einer unstrukturierte Deckplatte 23, von der die Kapillarkanäle 21 der strukturierten Platte 22 abdeckt sind.

Die Absorption von Energie des einfallenden Lichts innerhalb des an sich - ohne die Partikel 4 - transparenten Fluids 3 erfolgt allein durch die Partikel 4, die aufgrund ihrer materialtypischen dunklen Färbung einen großen Absorptionskoeffizienten aufweisen. Zur Realisierung der Fluidströmung sind die Kapillarkanäle 21 an deren entgegengesetzten Enden in einem Sammelkanal 24 als Fluideinlass des Kapillarglaselements 2 und in einem Sammelkanal 25 als Fluidauslass zusammengeführt und in den Kreislauf 5 eingebunden, in dem das Fluid 3 mittels einer Pumpe 51 umgewälzt wird. Dadurch kann die von den Partikeln 4 aufgenommene Energie abgeführt und einem hier nicht gezeichneten Heiz- oder Kühlsystem zugeführt werden.

Fig. 2b zeigt nochmals den detaillierten Aufbau des Kapillarglaselements 2 aus strukturierter Platte 22 und unstrukturierter Deckplatte 23 mit einer auf den Stegen zwischen den Kapillarkanälen 21 auflaminierten Klebeschicht 26. Der mittlere Abstand benachbarter Kapillarkanäle 21 wird vorteilhaft im Bereich von 1 mm bis 10 mm, vorzugsweise zwischen 3 und 6 mm, gewählt und sollte im Verhältnis das ca. 0,5 bis 1,0-fache der Kapillarkanalbreite betragen. Die Höhe der Kapillarkanäle liegt

- abhängig von der Viskosität des Fluids 3, der Partikelgröße und den Strukturierungverfahren zur Herstellung der Kapillarkanäle 21 - im Bereich von 0,1 bis 3 mm, vorzugsweise zwischen 0,5 und 1,5 mm, und beträgt in den nachfolgenden Beispielen 1 mm.

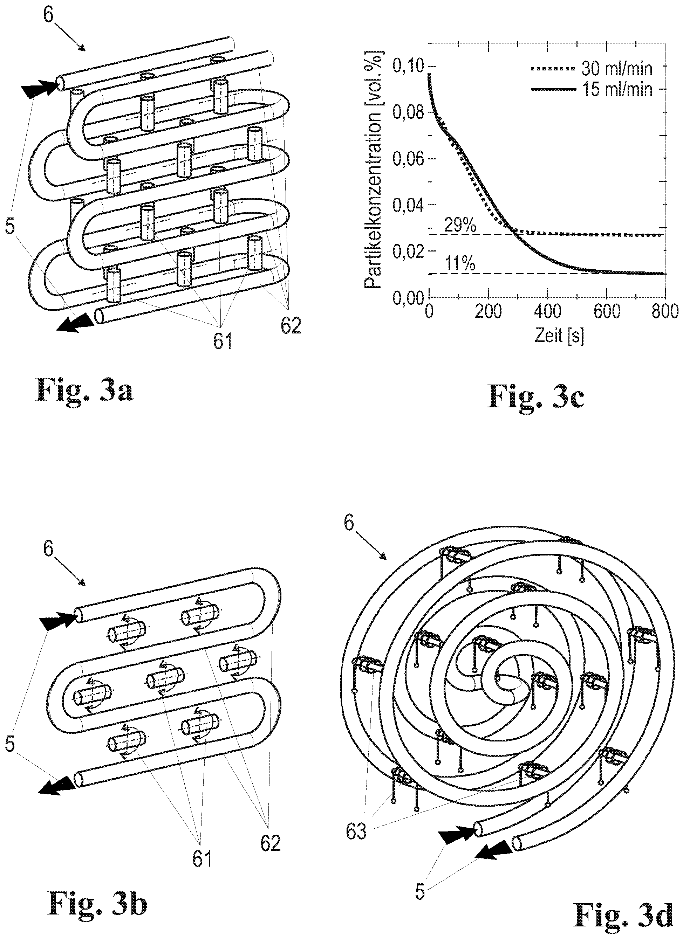

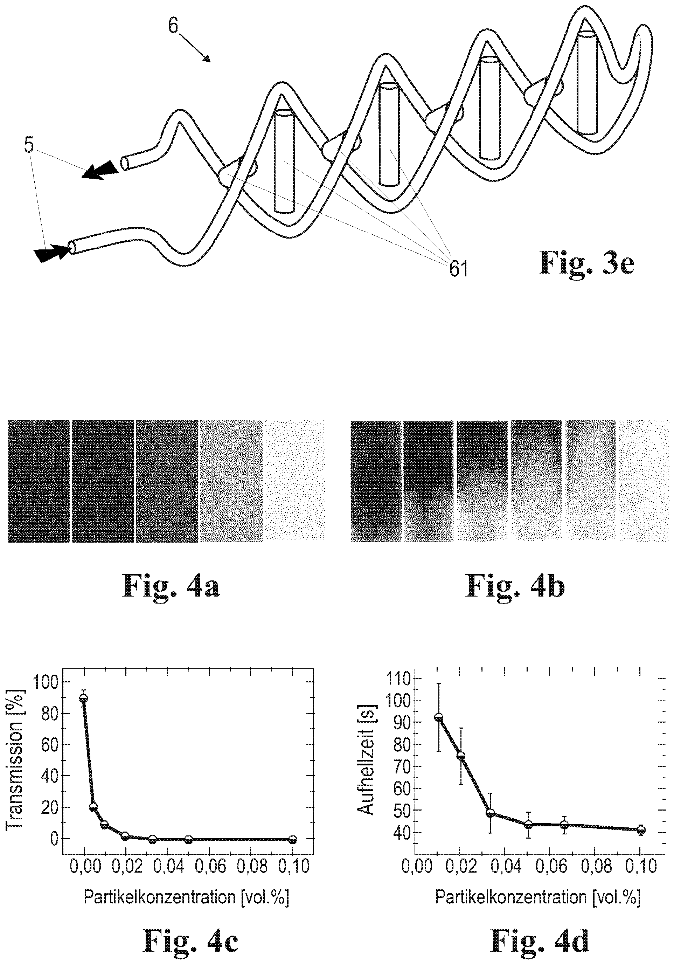

Fig. 3 zeigt eine bevorzugte Ausführungen des Partikelkollektors 6, der für die so genannte SPD-Umschaltung der Transparenz sowie der Absorption sorgt.

Das Umschalten des SPD-Zustandes des Gebäudehüllenflächenelements 1 beinhaltet eine Variation der Partikelkonzentration der Partikel 4 im Fluid 3 innerhalb des Kapillarglaselements 2. Um eine Verunreinigung zu vermeiden und eine homogene Strömung durch das gesamte System ohne Einblasen von Luft zu gewährleisten, muss der Trennvorgang in einer Linie erfolgen, d.h. ohne den Fluidstrom zu unterbrechen. Ein System zur Partikelsammlung und Re-Suspension erfolgt daher in einem Partikelkollektor 6, wie er in Fig. 3a, Fig. 3b, Fig. 3d und

Fig. 3e in unterschiedlichen Ausführungsvarianten dargestellt ist.

Ein vorzugsweise gewähltes Design des Partikelkollektors 6, das durch rechnerische Simulation der Partikelfeldinteraktion erhalten und aus der Magnetkonfiguration und Feldstärke aus Laborexperimenten abgeleitet wurde, ist in Fig. 3a dargestellt. Es enthält definierte Rohrabschnitte 62, die eine Reihe von mäanderformigen Schlauch- oder Rohrwindungen aufweisen, um zwanzig gleichmäßig beabstandete Permanentmagnete 61 zu platzieren. Die Befestigungswinkel für die Permanentmagnete 61 können automatisch für kontrollierte Partikelanziehung oder Freigabe um einen Winkel von 90° gedreht werden. Den Freigabefall der Magnetausrichtung der Permanentmagnete 61 zeigt Fig. 3b bei einer anderen Gestaltung der definierten Rohrabschnitte 62 mit einer ebenen Anordnung der mäanderförmigen Schlauch- oder Rohrwindungen, indem die Permanentmagnete 61 parallel zu den fluiddurchströmten definierten Rohrabschnitten 62 ausgerichtet sind. Von dieser Konfiguration folgt bei der Umschaltung auf den senkrechten ON-Zustand der Permanentmagnete 61 die Partikelkonzentration am Auslass 64 des Partikelkollektors 6 einer Zerfallsfunktion, wie in Fig. 3c gezeigt, abhängig von der Strömungsgeschwindigkeit. Interessanterweise beeinflusst die Durchflussmenge nicht primär die Abklingzeit. Stattdessen wirkt sie auf die Gesamtzahl der Partikel 4, die möglicherweise gesammelt werden können, während das Fluid 3 den Partikelkollektor 6 durchquert. Die Kollektorparametrierung und die weitere Optimierung müssen daher hinsichtlich der gewünschten Durchflussmenge (abgestimmt auf die thermischen Anforderungen des Systems), der Magnetfeldstärke (primär bestimmt durch die Verwendung von Permanentmagneten oder Elektromagneten), der Kollektorgröße und der Konzentration der Partikel 4 im Fluid 3 sowie dem gewünschten Grad der Abschattung des Gebäudehüllenflächenelements 1 erfolgen. Durch die Steuerung der Durchflussmenge der Partikel 4 durch den Partikelkollektor 6 kann eine abstimmbare Abschattung erreicht werden.

Die Fig. 3d und Fig. 3e zeigen zu den oben beschriebenen Ausführungen des Partikelkollektors 6 äquivalente Anordnungen definierter Rohrabschnitte 62, die in diesen Ausführungsvarianten mit Elektromagneten 63 ausgestattet sind. Die Elektromagnete 63 benötigen - im Gegensatz zu den in den vorherigen Beispielen verwendeten Permanentmagneten 61 - keine mechanische Umschaltung, sondern werden mit ein- oder ausgeschaltetem Stromfluss aktiviert oder passiviert.

In Fig. 3d ist als Struktur der definierten Rohrabschnitte 62 eine Spiralform gewählt und die stilisiert gezeichneten Elektromagnete 63 sind zwischen parallelen Abschnitten der parallel geführten Rohrspiralen gleichmäßig beabstandet angeordnet. Der ON-Zustand des so gestalteten Partikelkollektors 6 wird durch Zuschalten des Spulenstromes der Elektromagnete 63 aktiviert und kann für unterschiedliche Magnetfeldstärken gesteuert werden.

Fig. 3e zeigt eine weitere Ausführungsform der definierten Rohrabschnitte 62 des Partikelkollektors 6, bei der die Rohrform einer Schraubenlinie folgt. Bevorzugt ist diese Form als Doppelhelixstruktur ausgeführt, wobei die Elektromagnete 63 gleichmäßig beabstandet entlang der Mittelachse der Helix jeweils fortschreitend um gleiche Winkel zueinander verdreht angeordnet sind.

In allen vorstehend beschriebenen Anordnungen des Partikelkollektors 6 können wahlweise die Permanentmagnete 61 und Elektromagnete 63 beliebig ausgetauscht werden.

Anhand der Fig. 4a-4d wird nachfolgend die Modulation von Transparenz und Abschattung innerhalb des Kapillarglaselements 2 des Gebäudehüllenflächenelements 1 erläutert.

Als Referenz werden zunächst optische Daten direkt für Suspensionen mit unterschiedlicher Partikelkonzentration und während des Klarzustandes des Fluids 3 gesammelt. Die Opazität der Ausgangssuspensionen (Fig. 4a) ergibt sich aus der Lichtstreuung und Absorption der zufällig verteilten Partikel 4. Dynamische Lichtstreuung (DLS) bestätigt die mittleren Teilchendurchmesser < 200 nm der in diesem Beispiel gewählten Partikel 4. Die entsprechenden Transmissionsdaten sind in Fig. 4b dargestellt, was eine Variabilität innerhalb von 100 - 8% über den betrachteten Bereich der Partikelkonzentrationen für eine geometrische Weglänge von 10 mm ergibt.

Unter Verwendung von Permanentmagneten 61 oder Elektromagneten 63 können Partikel 4 aus der Suspension (Fluid 3) "herausgezogen" werden, wodurch die optische Durchlässigkeit des Fluids 3 erhöht wird. Fig. 4c zeigt ein solches typisches Beispiel, bei dem die Partikel 4 aus dem Fluid 3 durch Anbringen eines Permanentmagneten 61 mit einer Feldstärke von 0,4 T an den Boden einer Küvette in einem Abstand von 1,7 mm ausgefällt wurden. In diesem Fall wird die volle Transparenz des Fluids 3 nach ca. 4 min hergestellt. Zeitaufgelöste Untersuchungen dieser Klärungswirkung wurden unter Verwendung einer Voll-HD-Kameraaufzeichnung durchgeführt. Ausgewählte Schnappschüsse sind in Fig. 4c dargestellt. Die aufgezeichneten Bilder können dann einer Grauwertanalyse unterzogen werden, wobei das klare Fluid 3 als "weiße Referenz" genommen wird. Die Klärungszeit (Umschaltzeit) wird dabei als die Zeit definiert, bei der 90% der anfänglichen Durchlässigkeit erreicht worden ist. Entsprechende Daten sind in Fig. 4d angegeben. Eine Abnahme der Klärungszeit auf ca. 45 s wird mit zunehmender Partikelkonzentration der Partikel 4 bis zu einem Gehalt von 0,05 Vol.% beobachtet, über die keine weitere Verbesserung mehr beobachtet worden ist.

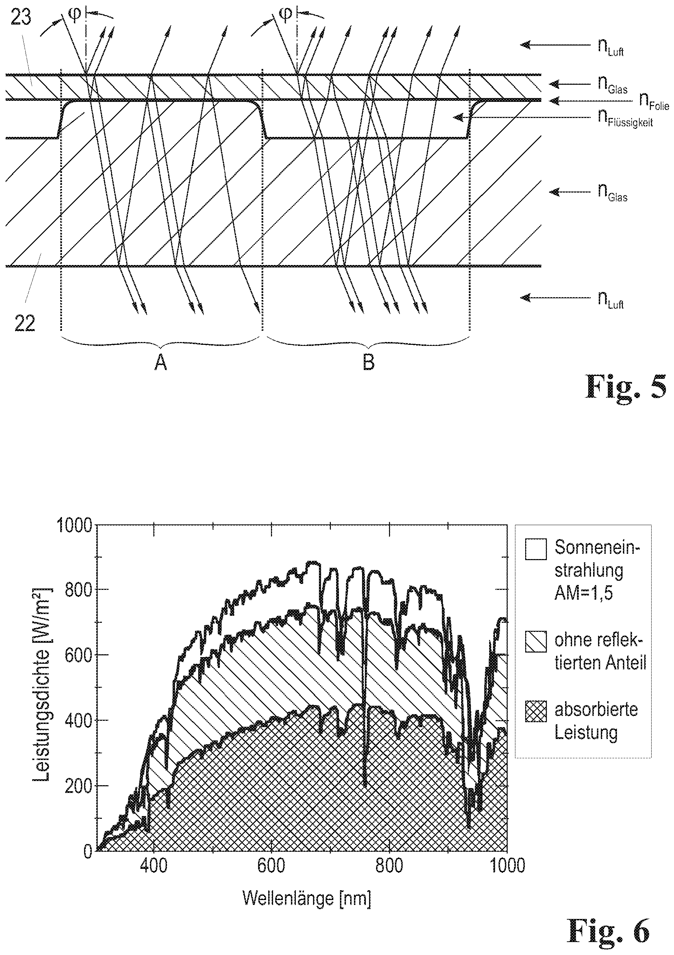

Im Folgenden soll die Transmission und Energieaufnahme anhand der Fig. 5 und Fig. 6 erläutert werden.

Zur Bewertung der optischen Eigenschaften wird die Geometrie des vorliegenden SPD, d.h. der Schichtaufbau des Kapillarglaselements 2 des Gebäudehüllenflächenelements 1 als eine Seite-an-Seite-Kombination von zwei Stapeln A und B im Bereich eines Kapillarkanals 21 und im Bereich eines Steges zwischen zwei Kapillarkanälen 21 betrachtet, wie in Fig. 5 gezeigt, und mit einem Modell angenähert. Die Stapel A und B werden als endlich dickes Medium und halbunendliches Medium modelliert und sind über das Kapillarglaselement 2 gleichmäßig verteilt. Stapel A entspricht dem Teil aus der strukturierten Platte 22 (Brechungsindex $n_{glas}$), einer dünnen Klebeschicht 26 (Brechungsindex $n_{foil}$) und der Deckplatte 23 ($n_{glas}$). Der Stapel B umfasst das Glas der strukturierten Platte 22, die fluidische Schicht (Fluid 3 mit $n_{fluid}$ innerhalb des Kapillarkanals 21 und das Glas der Deckplatte 23. Die einzelnen Komponenten werden durch ihren jeweiligen Brechungsindex und ihren spektralen Absorptionskoeffizienten differenziert.

In Fig. 6 ist die optische Durchlässigkeit und das Reflexionsvermögen auf der Ebene des SPD des Gebäudehüllenflächenelements 1 dargestellt. Die Grafik gibt das Sonnenbestrahlungsspektrum an der Luftmasse 1,5 und die entsprechenden Anteile an Energie, die vom System reflektiert und absorbiert werden, an.

Durch computergenerierte Daten können über die spektrale, winkelabhängige Reflexion und Extinktion der einzelnen Abschnitte der SPD unter Verwendung eines Fluids 3 mit einer Partikelkonzentration der Partikel 4 von 0,05 Vol. % dargestellt werden. Die eingesetzten Gläser und eine bevorzugt verwendete EVA-Folie als Deckplatte 23 weisen eine hohe Transparenz über den sichtbaren und nahezu IR-Spektralbereich auf, sodass die Menge der absorbierten Energie im Stapel A von Fig. 5 vernachlässigbar ist. In diesem Fall wird die ankommende Strahlung vollständig übertragen oder spiegelt sich an den Schicht-Grenzflächen. Im Stapel B von Fig. 5 wird eine signifikante Absorption durch die Fluidschicht des Fluids 3 induziert. Der imaginäre Teil des Brechungsindexes k des Stapels B wird durch $k = (\alpha \cdot \lambda) / (4\pi)$ mit dem durch Spektralphotometrie erhaltenen Absorptionskoeffizienten $\alpha$ und der Wellenlänge $\lambda$ geschätzt.

Die Reflektions- und Absorptionsdaten können anschließend über alle Einfallswinkel $\varphi$ gemittelt und auf ein Referenz-Sonnenbestrahlungsspektrum bei der Luftmasse 1,5 angewendet werden, um die Menge der reflektierten und absorbierten Sonnenenergie auf der Ebene des SPD zu quantifizieren. In der Darstellung von Fig. 6 zeigt die Differenz zwischen dem weißen und schraffierten Bereichen der Spektralenergiekurven die Energiemenge, die zurück in die Atmosphäre reflektiert wird. Der kreuzschraffierte Bereich entspricht der effektiven Energiemenge, die im Stapel B von Fig. 5 absorbiert wird. Integrierte Daten sind in der folgenden Tabelle 1 zusammengefasst. Da jeder der Stapel A und B genau die Hälfte des Systems einnimmt, entspricht die effektive Energieaufnahme des Systems pro Fläche der Hälfte der in Tabelle 1 angegebenen Werte.

Tabelle 1: Relative Energieaufnahme $E_{eff}$ im Stapel B und auf SPD-Ebene für verschiedene Partikelkonzentrationen c.

| c (vol.%) | $E_{eff,}$ Stapel B | $E_{eff,}$ SPD |
|---|---|---|
| 0.05 | 50.37 % | 25.19 % |
| 0.10 | 71.95 % | 35.98 % |
| 0.25 | 84.79 % | 42.40 % |

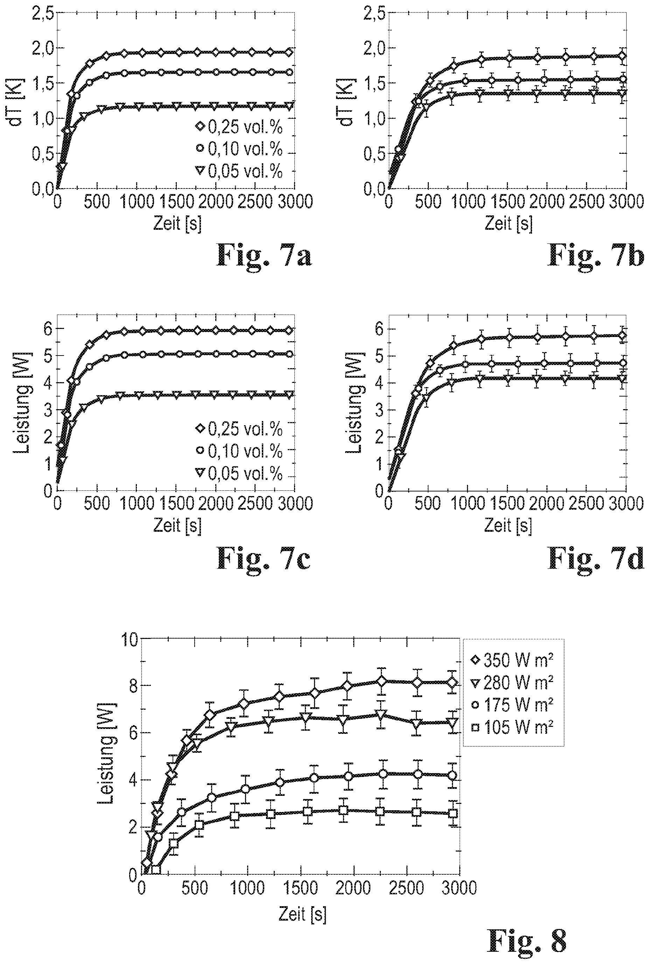

Im Zusammenhang mit den Fig. 7a-7d soll im Weiteren die SPD-Abschattung und deren Modulation erläutert werden.

Der Betrieb des SPD eines erfindungsgemäßen Gebäudehüllenflächenelements 1 unter künstlicher Beleuchtung ist in Fig. 7 dargestellt, beginnend mit der Temperaturdifferenz ΔT zwischen Einlass am Sammelkanal 24 und Auslass am Sammelkanal 25 (nur in Fig. 2 dargestellt) bei einer 300 × 210 mm$^2$ fluidischen Anordnung (SPD) zur Veränderung der Partikelkonzentrationen der Partikel 4 in einem Fluid 3, einer Fließgeschwindigkeit von 50 ml min-1 und einer Strahlungsbelastung von 280 W m$^{-2}$.

Es wird eine sehr gute Übereinstimmung zwischen experimentellen und rechnerischen Daten gefunden, die die Anwendbarkeit des FEM-Modells bestätigt. Eigene Versuche wurden unter kontrollierten Bedingungen durchgeführt, um sicherzustellen, dass die Einlass- und Umgebungstemperatur während der gesamten Dauer des Experiments konstant bleibt. Daher ist die Temperaturerhöhung, die am SPD-Ausgang aufgezeichnet wird, ausschließlich auf Bestrahlung zurückzuführen. In Fig. 7b ist der Energieertrag aufgetragen, der es ermöglicht, die intrinsische Ertragseffizienz bei fester Strömungsgeschwindigkeit und Strahlungsflussdichte zu quantifizieren, die sich aber für eine unterschiedliche Partikelkonzentration ändert (wie in nachfolgender Tabelle 2 abzulesen).

Tabelle 2: Ertragseffizienz für ein mit einem Solarsimulator (280 Wm$^{-2}$) beleuchtetes 300 × 210 mm$^2$ Fenster bei 20 °C Eintrittstemperatur und 50 ml min$^{-1}$ Durchflussmenge

| c (vol.%) | Ertragsleistung (W, durchschnittlich) | intrinsische Ertragseffizienz |
|-----------|---------------------------------------|-------------------------------|
| 0.05 | 4,10 | 23,2 % |
| 0.10 | 4,75 | 26,9 % |
| 0.25 | 5,87 | 33,3 % |

Die geringen Abweichungen zwischen den experimentellen Daten (Fig. 7b und Fig. 7d) und dem Berechnungsmodell (Fig. 7a, Fig. 7c), die mit zunehmender Partikelkonzentration c der Partikel 4 zunehmen, sind im Wesentlichen zurückzuführen auf eine zu ungenaue Modellierung der optischen Eigenschaften des partikelbeladenen Fluids 3, insbesondere auf die Vernachlässigung der an den Partikeln 4 auftretenden Mehrfachstreuung.

Ein zweiter Satz von Experimenten ist in Fig. 8 zusammengefasst. Hier wurde die ankommende Strahlungsflussdichte bei konstanter Strömungsgeschwindigkeit von 50 m min-1 und Partikelkonzentration von 0,25 Vol.% variiert. Offensichtlich nimmt die Menge an Ertragsenergie mit zunehmender Strahlungsflussdichte zu. Für die entsprechende intrinsische Ertragseffizienz, d.h. das Verhältnis zwischen der Energiemenge, die an das System übertragen wird, und der Energiemenge, die durch das Fluid 3 absorbiert wird, wurde keine signifikante Veränderung um einen Wert von (38,5 ± 1,3)% gefunden. Das heißt, innerhalb des untersuchten Bereichs der Beleuchtungsintensität gibt es eine lineare Abhängigkeit der Ertragsleistung von der Beleuchtungsdichte (siehe Fig. 8).

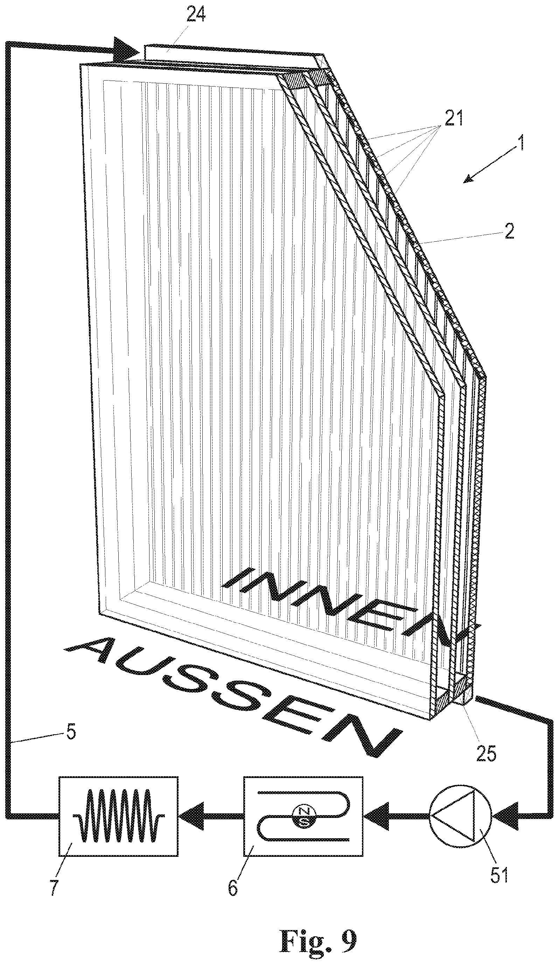

In einer vorgesehenen Anwendung ist das Gebäudehüllenflächenelement 1 mit den Kapillarkanälen 21 Teil einer Dreifachverglasung, entweder nach außen oder nach innen, wie in hinterer Scheibenposition der Dreifachverglasung von Fig. 9. Auf der Außenposition kann das SPD als Wärmetauscher verwendet werden, wo die Außenumgebung als Reservoir betrachtet wird, aus dem Wärme- und Solarenergie geerntet wird. In Innenposition wirkt das SPD als Heizelement (oder Kühler) für die Raumluft.

1. Ausführungsbeispiel

Kapillarglaselement 2

Die Herstellung des Kapillarglaselements, wie in Fig. 2b dargestellt, ist mit Kapillaren mit einem Querschnitt von ca. 3 mm$^2$ und einem interkapillaren Abstand von ca. 3 mm in konventionelle Natronkalk-Glasscheiben mit Größen bis ca. 1000 × 700 mm$^2$ unter Verwendung eines Inline-Walzprozesses hergestellt, der am Ausgang eines Glasschmelztanks durchgeführt wird. Die Bindung erfolgte durch einen EthylenVinylacetat-Film (evguard, Folienwerk Wolfen GmbH, Deutschland), der an der Grenzfläche zwischen Deckplatte 23 und strukturierter Platte 22 (Kapillarglas) aufgetragen und gehärtet wurde. Nach dem Aushärten ist der eingesetzte Film über den sichtbaren Spektralbereich mit einem Brechungsindex von $n_{foil}$ = 1,48 optisch transparent. In Übereinstimmung mit bisherigen eigenen Studien wird hier auf Kapillarglasflächen von 300 × 210 mm$^2$ orientiert, entsprechend einer Anzahl von 32 Kapillarkanälen 21 pro SPD. Für die Deckplatte 23 wird ein Aluminosilikatglas (AS87, Schott TGS) mit angepasstem Wärmeausdehnungskoeffizienten von

$$\alpha_{(20\text{-}300\ ^\circ C)} = 8,8 \cdot 10^{-6}\ K^{-1}$$

verwendet. Die Wärmeleitfähigkeit a (25 °C) der Deckplatte 23 betrug 0,96 W m$^{-1}$ K$^{-1}$.

Funktionsflüssigkeit (Fluid 3)

Als Dispersionsmedium für die Partikel 4, hier Magnetitnanopartikel, wird ein nicht korrosives Wasser-Glykol-Gemisch (43 Vol.% Antifrogen® L, Clariant Produkte GmbH, Deutschland) mit niedrigem Gefrierpunkt verwendet. Bei 20 °C hat dieses Fluid 3 eine Dichte von $\rho$ = 1,043 g cm$^{-3}$, eine dynamische Viskosität von 5 mPa s und einen Brechungsindex von $n_{fluid}$ = 1,382 über den sichtbaren Spektralbereich. Die spezifische Wärmekapazität des oben spezifizieren Fluids 3 bei 20 °C beträgt 2,5 kJ kg$^{-1}$ K$^{-1}$ und seine Wärmeleitfähigkeit 0,21 W mK$^{-1}$. Für die Partikelbeladung mit Partikeln 4 werden sphärische Eisen-(III)-Oxidteilchen (Fe$_3$O$_4$, Sigma-Aldrich, USA) mit Teilchengrößen im Bereich von 50 nm bis 100 nm verwendet. Das Pulver sollte eine Reinheit von 97% auf Spurenmetallbasis mit einer Gesamtdichte von etwa 5 g cm$^{-3}$ haben. Die Partikel 4 weisen eine spezifische Oberfläche von mehr als 60 m$^2$ g$^{-1}$ auf. Um die Stabilität der Suspension des Fluids 3 zu erhöhen, werden negative Ladungen auf der Teilchenoberfläche durch Zugabe von Trinatriumcitrat (Na$_3$C$_6$H$_5$O$_7$, Sigma-Aldrich, USA) zu einer wässrigen Teilchensuspension mit einem Volumenanteil von Teilchen von 10$^{-1}$ Vol.% induziert, sodass eine Konzentration von [Na$_3$C$_6$H$_5$O$_7$] = 0,1 mol l$^{-1}$ entsteht. Diese Suspension wird dann auf 90 °C erhitzt und 15 min gerührt, bevor der wässrige Teil entfernt werden kann. Die so getrockneten Teilchen werden dann in Aceton gewaschen und erneut in Wasser dispergiert: Dieses Verfahren kann mehrfach (beispielsweise dreimal) wiederholt werden, um die Konzentration der Citrat-Ionen in der Lösung zu verringern, bevor die endgültige Suspension in der Wasser-Glykol-Lösung vorliegt. Optische Eigenschaften der Suspension (klar und beladen) werden auf einem UV-Vis-IR-Spektrometer durch Analyse der direkten und diffusionsspektralen Transmission und Reflexion bestimmt.

Hierzu werden Suspensionen unterschiedlicher Partikelkonzentration in Siliciumdioxid-Küvetten gegeben, für die entsprechende Hintergrundkorrekturen durchzuführen sind.

Testergebnisse

Die oben genannten Anordnungen und Flüssigkeiten (für das Fluid 3) wurden in Prototyp-SPDs kombiniert, auf denen Wärmeaustausch-Eigenschaften und solarthermische Energieaufnahme getestet wurden. In einem typischen derartigen Experiment wurde das nach obigen Maßgaben hergestellte Fluid 3 bei einer Temperatur von 22 °C äquilibriert und dann mit einer peristaltischen Pumpe 51 mit einer Strömungsgeschwindigkeit von 50 ml min$^{-1}$ in das System gepumpt (nachfolgende Experimente wurden auch bei variierender Strömungsgeschwindigkeit durchgeführt). Unter Verwendung einer automatisierten Datenerfassungsroutine wurden die Umgebungstemperatur, die Eintrittstemperatur und die Austrittstemperatur als Funktion der Zeit aufgezeichnet. Zusätzlich wurden gelegentliche Temperaturabbildungen mit einer IR-Kamera gesammelt. Die kontrollierte Strahlungswärmeinjektion erfolgte auf der Seite der Deckplatte 23 des Kapilarglaselements mit einem Solarsimulator, der auf einem LED-Array (Phytolumix UHDS, Futureled GmbH, Deutschland) basierte, um die Sonnenspektralstrahlung über den Spektralbereich von 420 nm auf 760 nm zu replizieren. In diesem Bereich ist das oben beschriebene Kapillarglasmodul praktisch vollständig transparent. Der Strahlungsfluss war auf 350 W m$^{-2}$ bei einem Lampenkollektorabstand von 250 mm begrenzt. Neben der Fresnel-Reflexion von den Glasoberflächen der Platten 22 und 23 und Laminat-Grenzflächen der Kleberschicht 26 wird der optische Verlust also allein durch die Konzentration der Partikel 4 im Fluid 3 bestimmt.

Berechnungssimulation

Zur weiteren Parametrierung und Optimierung des SPD für das Gebäudehüllenflächenelement 1 wurde auf der Softwareplattform COMSOL Multiphysics v5.1 ein dreidimensionales Finite-Element-Modell (FEM) entwickelt. Dieses Modell wurde verwendet, um die stationäre Wärmegewinnung des vorliegenden SPD als eine Funktion der Konzentration der Partikel 4 im Fluid 3 zu bestimmen, die aus früheren eigenen FEM-Modellrechnungen des Kapillarglases stammt.

Das winkelabhängige spektrale Reflexionsvermögen und die Extinktion wurden durch ein Transfer-Matrix-Verfahren auf der Basis von Fresnel-Gleichungen erhalten, wobei ein statisches Fluid 3 mit einer bestimmten Konzentration an Partikeln 4 angenommen wurde. Hierzu wurden die optischen Eigenschaften der Suspension unter Verwendung des komplexen Brechungsindex von Eisen-(III)-oxid, wie mit weiteren Parametern für die Berechnungen in folgender Tabelle 3 angegeben.

Tabelle 3: Optische und geometrische Eigenschaften der Stapel A und B (s. Fig. 5) zur Simulation der spektralen Reflexion und Absorption auf SPD-Ebene mit Wellenlänge $\lambda$ und Imaginärteil des Brechungsindexes k unter Partikelkonzentration von 0,05 Vol.%.

| | Stapel A | | Stapel B | |
|---|---|---|---|---|
| | Brechungsindex | Dicke | Brechungsindex | Dicke |
| Deckglas | $1{,}4605 + 0{,}0037/\lambda^2$ | 0,7 mm | $1{,}4605 + 0{,}0037/\lambda^2$ | 0,7 mm |
| EVA-Kleber / partikelbeladenes Fluid | 1,506 | 5,0 μm | $1{,}382 + i \cdot k(\lambda)$ | 1,0 mm |

|  | Stapel A | | Stapel B | |
|---|---|---|---|---|
|  | Brechungsindex | Dicke | Brechungsindex | Dicke |
| Kapillarglas | $1{,}4605 + 0{,}0037/\lambda^2$ | 5,0 mm | $1{,}4605 + 0{,}0037/\lambda^2$ | 4,0 mm |

Partikelkollektor 6

Die Partikelkollektor-Suspender-Konstruktion (Partikelkollektor 6) wird in ähnlicher Weise aus der rechnerischen Simulation der Wechselwirkung zwischen einem Ensemble von Magnetitpartikeln (als magnetische Partikel 4) in einem Magnetfeld abgeleitet. Dazu wurde softwaregestützt eine Feldgeometrie identifiziert, die eine effiziente Ansammlung der Partikel 4 ermöglicht und mit den aktuellen SPD kostengünstig umgesetzt werden kann. Ausgehend von der Annahme einer homogenen Verteilung von sphärischen Partikeln 4 wurden Drag-, Brownsche und magnetische Kräfte betrachtet.

Die endgültige Gestaltung, wie sie in Fig. 3a dargestellt ist, hat einen inneren Rohrdurchmesser von 12 mm, neun mäanderförmige Rohr- bzw. Schlauchbogen mit parallelen Abschnitten, zwischen denen zwanzig stabförmige Permanentmagneten 61 orthogonal und parallel umschaltbar angebracht sind und eine Restmagnetflussdichte von 1,26 T aufweisen. Der Partikelkollektor 6 arbeitet mit einem Partikeldurchmesser von 1 μm (unter Berücksichtigung der potentiellen Agglomeration), eine Partikeldichte von 5000 kg m$^{-3}$, einer Viskosität des Fluids 3 von 5,144 mPa s, einer Fluiddichte von 1,037 g cm$^{-3}$ und Partikeln 4 mit einer magnetischen Permeabilität von 9. Fluid-Partikel-Wechselwirkungen wurden zunächst vernachlässigt.

2. Ausführungsbeispiel

Ein erster Anwendungsfall richtet sich auf ein Gebäudehüllenflächenelement 1, wie es als Ausschnitt von einer Gebäudedreifachverglasung in Fig. 9 dargestellt ist. Das SPD in Form des Kapillarglaselements 2 findet einen typischen Wintertag an der Außenseite der Dreifachverglasung vor, die mit einer Außentemperatur von -5 °C und einer durchschnittlichen spezifischen Strahlung von 100 W m$^{-2}$ an seiner Außenseite beaufschlagt ist. Das Kapillarglaselement 2 mit den zwischen der strukturierten Platte 22 und der Deckplatte 23 angeordneten Kapillarkanälen 21 soll sich auf der Innenposition einer Gebäudemehrfachverglasung befinden und wird mit einer Durchflussmenge von 20 l h$^{-1}$ m$^{-2}$ und einer Fluidtemperatur am Einlass von 23 °C im Kreislauf 5 betrieben. Dabei wird das Fluid 3, gemäß der schematischen Darstellung von Fig. 9, aus dem Sammelkanal 25 über eine Pumpe 51 im Fluidkreislauf 5 umgewälzt und passiert den Partikelkollektor 6, der bevorzugt innerhalb eines Rahmenelements (nicht gezeichnet) der Dreifachverglasung untergebracht ist, um je nach Abschattungsbedarf die magnetische Feldwirkung der Elektromagnete 63 (in Fig. 9 nur stilisiert angedeutet) zu erhöhen, zu verringern oder abzuschalten. Falls im Kapillarglaselement 2 durch umlaufende Partikel 4 Strahlungsenergie absorbiert werden kann, wird diese in einem Wärmetauscher 7 abgeführt oder zur Aufrechterhaltung der Einlasstemperatur von 23 °C im Fluidkreislauf 5 belassen.

Das fluidische Kapillarglaselement 2 des Gebäudehüllenflächenelements 1 kann dadurch ein angenehmes Raumklima bieten, auch bei sehr kalter Außentemperatur. Infolge des Kreislaufs 5 wird das Fluid 3, das an einem klaren Wintertag mindestens eine Restmenge an Partikeln 4 durch das SPD mitführt, die im SPD aufgenommene Energie abgeben. Durch Verdunkeln des Fluids 3 mittels einer vom Partikelkollektor 6 zusätzlich "freigelassenen" Menge von Partikeln 4 kann eine noch etwas höhere Temperatur erreicht werden, was jedoch lediglich auf Kosten des nur noch beschränkt durchgelassenen Tageslichtes erfolgen kann.

3. Ausführungsbeispiel

Die Kapillarglaselemente 2 der Gebäudehüllenflächenelemente 1 sollen auf der Innenposition einer Mehrfachverglasung (wie in Fig. 9 stilisiert gezeichnet) angebracht sein und das Fluid 3 mit einer Durchflussmenge von 20 l h$^{-1}$ m$^{-2}$ und einer Fluidtemperatur von 20 °C am Einlass des Kapillarglaselements 2 einströmen. Die stationären Temperaturen werden an verschiedenen Stellen des Innenraumes bei einer durch eine Pumpe 51 erfolgenden Umwälzung des klaren Fluids 3 oder des partikelbeladenen Fluids 3 (Absorptionskoeffizient wie im vorigen Beispiel) bestimmt und zur Steuerung von Kreislauf 5 und Partikelkollektor 6 und Wärmetauscher 7 genutzt.

Hier führt die Partikelbeladung mit den magnetischen Partikeln 4 zu einer signifikanten Verbesserung der Wärmedämmung des Innenraumes im Vergleich zur Verwendung eines transparenten Fluids 3 (4,5 °C Abnahme der Raumtemperatur).

Mit der oben vorgestellten SPD-Konfiguration (gemäß Fig. 2a und Fig. 3a) konnte erfolgreich nachgewiesen werden, dass die erfindungsgemäßen Gebäudehüllenflächenelemente 1, wie Glasaußenwand-, Glasdach- oder Fensterelemente, zur steuerbaren Abschattung und Absorption von Licht und Wärmestrahlung bestens geeignet sind, um eine Steuerung ohne elektrische Flächenelektroden und mit hoher Wärmeaufnahme der Partikel 4 des Fluids 3 sowie kurze Umschaltzeiten für die Änderung von Transparenz und Wärmekapazität zu erreichen.

Bezugszeichen

| 1 | Gebäudehüllenflächenelement |
|---|---|
| 2 | Kapillarglaselement (des Gebäudehüllenflächenelements) |
| 21 | Kapillarkanäle |
| 22 | strukturierte Platte |
| 23 | (unstrukturierte) Deckplatte |
| 24 | Sammelkanal (Einlass) |
| 25 | Sammelkanal (Auslass) |
| 26 | Kleberschicht (Laminat) |
| 3 | Fluid (Flüssigkeit) |
| 4 | (magnetische) Partikel |
| 5 | (gepumpter) Fluidkreislauf |
| 51 | Pumpe (des Fluidkreislaufs) |
| 6 | Partikelkollektor |
| 61 | Permanentmagnet |
| 62 | definierter Rohrabschnitt |
| 63 | Elektromagnet |
| 64 | Auslass (des Partikelkollektors) |
| 7 | Wärmetauscher (eines Heiz- oder Kühlsystems) |

**Patentansprüche**

1. Gebäudehüllenflächenelement mit steuerbarer Abschattung, das ein Kapillarglaselement (2) enthält, in dem eine Vielzahl paralleler Kapillarkanäle (21) ausgebildet ist und die Kapillarkanäle (21) an einer Seite des Kapillarglaselements (2) mit einem ersten Sammelkanal (24) und an einer zweiten Seite mit einem zweiten Sammelkanal (25) verbunden sind, wobei der erste Sammelkanal (24) und der zweite Sammelkanal (25) in einen Fluidkreislauf (5) eingebunden sind, sodass die Kapillarkanäle (21) über die Sammelkanäle (24, 25) von einem Fluid (3) durchströmbar sind, wobei die Kapillarkanäle (21) von dem Fluid (3) über den Fluidkreislauf (5) mittels einer Pumpe (51) umlaufend durchströmt sind, wobei dem Fluid (3) Partikel (4) in Form einer Suspension beigemengt sind, **dadurch gekennzeichnet, dass**

   - die Partikel (4) magnetisch sind, und
   - in dem Fluidkreislauf (5) außerhalb der Kapillarkanäle (21) mindestens ein Partikelkollektor (6) mit definierten Rohrabschnitten (62) angeordnet ist, wobei der Partikelkollektor (6) steuerbar ist, um die dem Fluid (3) beigemengten magnetischen Partikel (4) in den definierten Rohrabschnitten (62) des Partikelkollektors (6) magnetisch attraktiv zu konzentrieren und transient vom Fluidkreislauf (5) auszukoppeln.

2. Gebäudehüllenflächenelement nach Anspruch 1, **dadurch gekennzeichnet, dass** der Partikelkollektor (6) durch Umschalten der Ausrichtung von Permanentmagneten (61) aktivierbar ist.

3. Gebäudehüllenflächenelement nach Anspruch 1, **dadurch gekennzeichnet, dass** der Partikelkollektor (6) durch Einschaltungen von Elektromagneten (63) aktivierbar ist.

4. Gebäudehüllenflächenelement nach einem der vorhergehenden Ansprüche, **dadurch gekennzeichnet, dass** die definierten Rohrabschnitte (62) des Partikelkollektors (6) zweidimensional oder dreidimensional mit Rohr- oder Schlauchbogen ausgebildet sind.

5. Gebäudehüllenflächenelement nach Anspruch 4, **dadurch gekennzeichnet, dass** die definierten Rohrabschnitte (62) mäanderförmig angeordnet sind .

6. Gebäudehüllenflächenelement nach Anspruch 4, **dadurch gekennzeichnet, dass** die definierten Rohrabschnitte (62) als Helixform, Spiralform oder damit gebildete Doppelanordnungen ausgebildet sind.

7. Gebäudehüllenflächenelement nach einem der vorhergehenden Ansprüche, **dadurch gekennzeichnet, dass** das Fluid (3) eine wässrige Alkohollösung oder Alkanollösung ist.

8. Gebäudehüllenflächenelement nach einem der vorhergehenden Ansprüche, **dadurch gekennzeichnet, dass** das Fluid (3) ein Paraffinöl oder ein Siliconöl ist.

9. Gebäudehüllenflächenelement nach einem der vorhergehenden Ansprüche, **dadurch gekennzeichnet, dass** die magnetischen Partikel aus Eisen, Eisenoxid oder aus dunkelfarbigen Seltenerdenmetallen oder -metalloxiden bestehen.

10. Gebäudehüllenflächenelement nach einem der vorhergehenden Ansprüche, **dadurch gekennzeichnet, dass** die magnetischen Partikel eine Größenklasse aufweisen, die einem Viertel der Wellenlänge einer auf das Kapillarglaselement (2) einfallenden Strahlung, die bevorzugt absorbiert werden soll, entspricht oder größer ist.

11. Gebäudehüllenflächenelement nach einem der vorhergehenden Ansprüche, **dadurch gekennzeichnet, dass** das Kapillarglaselement (2) zwei miteinander verbundene Platten (22, 23) enthält, wobei zwischen gegenüberliegenden Oberflächen durch Oberflächenstrukturierung in wenigstens einer der Platten (22, 23) die Vielzahl paralleler Kapillarkanäle (21) ausgebildet ist und mit der anderen Platte (23) abgedeckt ist.

12. Gebäudehüllenflächenelement nach Anspruch 11, **dadurch gekennzeichnet, dass** das Kapillarglaselement (2) aus einer strukturierten Platte (22) und einer unstrukturierten Deckplatte (23) zusammengesetzt ist und strukturierte Platte (22) und Deckplatte (23) mittels einer auflaminierten Kleberschicht (26) mit angepasstem Brechungsindex miteinander verbunden sind.

13. Verbundfenster, aufweisend mindestens ein Gebäudehüllenflächenelement nach einem der Ansprüche 1 bis 10, wobei das Gebäudehüllenflächenelement den einem Gebäudeinnenraum zugewandten Abschnitt des Verbundfensters bildet.

14. Gebäudefassadensystem, aufweisend mindestens ein Gebäudehüllenflächenelement nach einem der Ansprüche 1 bis 10.

**Claims**

1. A building envelope surface element with controllable shadowing, which includes a capillary glass element (2) in which a plurality of parallel capillary channels (21) is formed and the capillary channels (21) are connected to a first collecting channel (24) on one side of the capillary glass element (2) and to a second collecting channel (25) on a second side, wherein the first collecting channel (24) and the second collecting channel (25) are integrated in a fluid circuit (5) so that the capillary channels (21) allow passage of a fluid (3) therethrough via the collecting channels (24, 25), wherein the fluid (3) flows in a circulating manner by means of a pump (51) through the capillary channels (21) via the fluid circuit (5), wherein particles (4) in the form of a suspension are added to the fluid (3),
**characterized in
that** the particles (4) are magnetic, and at least one particle collector (6) with defined pipe sections (62) is arranged in the fluid circuit (5) outside the capillary channels (21), wherein the particle collector (6) can be controlled in order to concentrate the magnetic particles (4) added to the fluid (3) in the defined pipe sections (62) of the particle collector (6) in a magnetically attractive manner and to decouple them transiently from the fluid circuit (5).

2. The building envelope surface element according to claim 1, **characterized in that** the particle collector (6) can be activated by changing over the alignment of permanent magnets (61).

3. The building envelope surface element according to claim 1, **characterized in that** the particle collector (6) can be activated by switching on electromagnets (63).

4. The building envelope surface element according to one of the preceding claims, **characterized in that** the defined pipe sections (62) of the particle collector (6) are designed two-dimensionally or three-dimensionally with pipe or tube bends.

**5.** The building envelope surface element according to claim 4, **characterized in that** the defined pipe sections (62) are arranged in a meander pattern.

**6.** The building envelope surface element according to claim 4, **characterized in that** the defined pipe sections (62) are designed as a helix, as a spiral or as double arrangements thereof.

**7.** The building envelope surface element according to one of the preceding claims, **characterized in that** the fluid (3) is an aqueous alcohol solution or alkanol solution.

**8.** The building envelope surface element according to one of the preceding claims, **characterized in that** the fluid (3) is a paraffin oil or silicone oil.

**9.** The building envelope surface element according to one of the preceding claims, **characterized in that** the magnetic particles consist of iron, iron oxide or dark-coloured rare-earth metals or rare-earth metal oxides.

**10.** The building envelope element according to any one of the preceding claims, **characterized in that** the magnetic particles have a size class that is equal or greater than one quarter of the wavelength of radiation which is incident on the capillary glass element (2) and is preferentially to be absorbed.

**11.** The building envelope surface element according to one of the preceding claims, **characterized in that** the capillary glass element (2) comprises two panels (22, 23) connected to each other, wherein the plurality of parallel capillary channels (21) is formed between opposite surfaces by surface structuring in at least one of the panels (22, 23) and is covered by the other panel (23).

**12.** The building envelope surface element according to claim 11, **characterized in that** the capillary glass element (2) is composed of a structured panel (22) and an unstructured cover panel (23), and the structured panel (22) and the cover panel (23) are bonded to each other by means of a laminated adhesive layer (26) that has an adapted refractive index.

**13.** A coupled window comprising at least one building envelope surface element according to any one of claims 1 to 10, wherein the building envelope surface element forms the section of the coupled window that faces a building interior.

**14.** A building facade system, comprising at least one building envelope surface element according to any one of the claims 1 to 10.

**Revendications**

**1.** Elément de surface de couverture de bâtiment comprenant un ombrage commandable, qui contient un élément en verre capillaire (2) dans lequel est formé une pluralité de canaux capillaires parallèles (21) et les canaux capillaires (21) sont reliés sur un côté de l'élément en verre capillaire (2) à un premier canal collecteur (24) et sur un deuxième côté à un deuxième canal collecteur (25), le premier canal collecteur (24) et le deuxième canal collecteur (25) étant intégrés dans un circuit de fluide (5), de sorte que les canaux capillaires (21) puissent être traversés par un fluide (3) via les canaux collecteurs (24, 25), les canaux capillaires (21) étant traversés en circulation par le fluide (3) via le circuit de fluide (5) au moyen d'une pompe (51), des particules (4) sous forme de suspension étant ajoutées au fluide (3),
est **caractérisée en ce
que** les particules (4) sont magnétiques, et dans le circuit de fluide (5), à l'extérieur des canaux capillaires (21), est disposé au moins un collecteur de particules (6) avec des sections de tube définies (62), le collecteur de particules (6) pouvant être commandé pour concentrer de manière magnétiquement attractive les particules magnétiques (4) mélangées au fluide (3) dans les sections de tube définies (62) du collecteur de particules (6) et les découpler de manière transitoire du circuit de fluide (5).

**2.** Elément de surface de couverture de bâtiment suivant la revendication 1 est **caractérisé en ce que** le collecteur de particules (6) peut être activé en commutant l'orientation d'aimants permanents (61).

**3.** Elément de surface de couverture de bâtiment suivant la revendication 1 est **caractérisé en ce que** le collecteur de particules (6) peut être activé en enclenchant des électroaimants (63).

**4.** Elément de surface de couverture de bâtiment suivant l'une quelconque des revendications précédentes est **caractérisé en ce que** les sections de tube définies (62) du collecteur de particules (6) sont formées de manière bidimensionnelle ou tridimensionnelle avec des coudes de tube ou de tuyau.

**5.** Elément de surface de couverture de bâtiment suivant la revendication 4 est **caractérisé en ce que** les sections de tube définies (62) sont disposées en méandres.

**6.** Elément de surface de couverture de bâtiment suivant la revendication 4 est **caractérisé en ce que** les sections de tube définies (62) sont réalisés sous la forme d'une hélice, d'une spirale ou d'arrangements doubles formés avec celles-ci.

**7.** Elément de surface de couverture de bâtiment suivant l'une quelconque des revendications précédentes est **caractérisé en ce que** le fluide (3) est une solution aqueuse d'alcool ou une solution d'alcanol.

**8.** Elément de surface de couverture de bâtiment suivant l'une quelconque des revendications précédentes est **caractérisé en ce que** le fluide (3) est une huile de paraffine ou une huile de silicone.

**9.** Elément de surface de couverture de bâtiment suivant l'une quelconque des revendications précédentes est **caractérisé en ce que** les particules magnétiques sont constituées de fer, d'oxyde de fer ou de métaux ou d'oxydes de métaux de terres rares de couleur sombre.

**10.** Elément de surface de couverture de bâtiment suivant l'une quelconque des revendications précédentes est **caractérisé en ce que** les particules magnétiques ont une classe de taille égale ou supérieure à un quart de la longueur d'onde d'un rayonnement incident sur l'élément en verre capillaire (2) qui doit être absorbé de préférence.

**11.** Elément de surface de couverture de bâtiment suivant l'une quelconque des revendications précédentes est **caractérisé en ce que** l'élément en verre capillaire (2) comprend deux plaques (22, 23) reliées entre elles, la pluralité de canaux capillaires parallèles (21) étant formée entre des surfaces opposées par structuration de surface dans au moins l'une des plaques (22, 23) et étant recouverte par l'autre plaque (23).

**12.** Elément de surface de couverture de bâtiment suivant la revendication 11 est **caractérisé en ce que** l'élément en verre capillaire (2) est composé d'une plaque structurée (22) et d'une plaque de recouvrement non structurée (23) et la plaque structurée (22) et la plaque de recouvrement (23) sont reliées entre elles au moyen d'une couche de colle (26) laminée avec un indice de réfraction adapté.

**13.** Fenêtre à double vitrage comportant au moins un élément de surface d'enveloppe de bâtiment suivant l'une quelconque des revendications précédentes 1 à 10, l'élément de surface de couverture de bâtiment formant la section de la fenêtre à double vitrage qui fait face à un espace intérieur de bâtiment.

**14.** Système de façade de bâtiment comportant au moins un élément de surface de couverture de bâtiment suivant une des revendications précédentes 1 à 10.

OFF 2 ON

22

23

3

4

Fig. 1a

1 OFF 1 ON

Fig. 1b

$T_{aus} > T_{ein}$

$T_{ein}$

**Fig. 2a**

**Fig. 2b**

**Fig. 3a**

**Fig. 3c**

**Fig. 3b**

**Fig. 3d**

Fig. 3e

Fig. 4a

Fig. 4b

Fig. 4c

Fig. 4d

Fig. 5

Fig. 6

Fig. 7a

Fig. 7b

Fig. 7c

Fig. 7d

Fig. 8

**Fig. 9**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014012559 A1
- US 20090308376 A1
- US 20140204450 A1
- US 2014123578 A1